# EUROPÄISCHE PATENTANMELDUNG

(11) **EP 0 598 355 A1**
(43) Veröffentlichungstag der Anmeldung: **25.05.1994**
(21) Anmeldenummer: 93118342.0
(22) Anmeldetag: 12.11.1993
(51) Int. Cl.: H04N 7/14

(54) **Kamerasteuereinrichtung für ein Bildfernsprech-Teilnehmergerät**

(30) Priorität: 17.11.1992 DE 4238743
(71) Anmelder: Alcatel SEL Aktiengesellschaft, D-70435 Stuttgart (DE)
(72) Erfinder: Böhm, Manfred, Dr., D-70499 Stuttgart (DE)
(74) Vertreter: Pohl, Herbert, Dipl.-Ing

(57) **Zusammenfassung**

Beschrieben wird eine Kamerasteuereinrichtung für ein Bildfernsprech- Teilnehmergerät, das ein Gehäuse aufweist, in dem eine Videokamera (10') schwenkbar aufgenommen ist. Erfindungsgemäß ist vorgesehen, daß die Kamerasteuerungseinrichtung eine Bildvergleichseinheit (14) aufweist, die aus einem Vergleich des aktuell von der Videokamera (10') erfaßten Bildes in einem Bildspeicher (13) abgespeicherten Referenzbildes ein Korrektursignal (K) ableitet, daß das Korrektursignal einer Kamerastelleinheit (15) der Kamerasteuereinrichtung zugeführt ist, die aus dem Korrektursignal (K) eine Nachführbewegung der Videokamera (10') steuerndes Stellsignal (S1-S4) ableitet, und daß die Kamerasteuereinrichtung eine durch das Stellsignal (S1-S4) gesteuerte Positioniereinrichtung (16) aufweist, welche die Nachführbewegung der Videokamera (10') ausführt.

## Beschreibung

Die Erfindung betrifft eine Kamerasteuereinrichtung für ein Bildfernsprech-Teilnehmergerät, das ein Gehäuse aufweist, in dem mindestens eine Videokamera schwenkbar aufgenommen ist.

Ein derartiges Teilnehmergerät für Bildfernsprechen ist aus der DE-OS 36 25 646 bekannt. Beim Öffnen eines Deckels des Gehäuses des bekannten Teilnehmergeräts in eine 45°-Stellung wird eine Videokamera aus ihrer Nullstellung in eine 45°-Stellung bewegt. Hierdurch wird erreicht, daß die optische Achse der im Deckel des Gehäuses schwenkbar angebrachten Videokamera in Bezug auf einen im Gehäuse des Teilnehmergeräts angeordneten Bildschirm derart positioniert wird, daß diese mit der Strahlenachse eines Strahlenganges eines Bildschirms zusammenfällt. Die bei dem bekannten Teilnehmergerät für Bildfernsprechen vorgesehene Schwenkbarkeit der Videokamera dient also lediglich dazu, diese in der Betriebsstellung des Teilnehmergeräts - bei aufgeklapptem Deckel - in eine definierte Lage zum Bildschirm des Gehäuses zu bringen, so daß eine Aufnahme des Benutzers scheinbar durch den Bildschirm hindurch ermöglicht wird.

Ein derartiges, aus mechanisch-konstruktiven Gründen eine schwenkbare Videokamera aufweisendes Bildfernsprech-Teilnehmergerät besitzt den Nachteil, daß die in Bezug auf den Benutzer unbewegliche, also feste Videokamera dessen Bewegungsspielraum vor dem Bildfernsprech-Teilnehmergerät erheblich einschränkt: Es kann in nachteiliger Art und Weise jeweils nur ein starrer und fest vorgegebener Bereich von der Videokamera erfaßt werden. Desweiteren besitzt ein Bildfernsprech-Teilnehmergerät mit fest eingebauter Kamera den Nachteil, daß die Bildgröße und die Bildqualität erheblich durch die Bewegungsmuster des Teilnehmers beeinflußt werden: Schnelle Bewegungen führen zur Unschärfe des Videobildes. Außerdem werden zu schnelle Änderungen der Kopfgröße des Teilnehmers vom Betrachter als unangenehm empfunden. Es ist zwar möglich, den Bildausschnitt derart festzulegen, daß das Videobild viel Hintergrund und eine kleinere Kopfdarstellung des Teilnehmers aufweist. Hierdurch fallen zwar die obengenannten Nachteile des bekannten Bildfernsprech-Teilnehmergeräts nicht so sehr ins Gewicht. Jedoch geht hierbei wiederum viel vom Gesichtsausdruck des Teilnehmers verloren, was zu einem unpersönlichen Bildeindruck und zu einer allgemein als unbefriedigenden Art des Bildfernsprechverkehrs führt.

Die Erfindung stellt sich daher die Aufgabe, eine Kamerasteuereinrichtung für ein Bildfernsprech-Teilnehmergerät der eingangs genannten Art zu schaffen, die dem Teilnehmer einen erhöhten Bewegungsspielraum vor der Videokamera des Bildfernsprech-Teilnehmergeräts erlaubt.

Diese Aufgabe wird erfindungsgemäß dadurch gelöst, daß die Kamerasteuereinrichtung eine Bildvergleichseinheit aufweist, die aus einem Vergleich des aktuell von der Videokamera erfaßten Bildes und eines in einem Bildspeicher abgespeicherten Referenzbildes ein Korrektursignal ableitet, daß das Korrektursignal einer Kamerastelleinheit der Kamerasteuereinrichtung zugeführt ist, die aus dem Korrektursignal ein eine Nachführbewegung der Videokamera steuerndes Stellsignal ableitet, und daß die Kamerasteuereinrichtung eine durch das Stellsignal gesteuerte Positioniereinrichtung aufweist, welche die Nachführbewegung der Videokamera ausführt.

Durch die erfindungsgemäßen Maßnahmen wird in besonders vorteilhafter Art und Weise eine deutliche Vergrößerung des Bewegungsspielraums des Bildfernsprech-Teilnehmers erreicht. Die erfindungsgemäß vorgesehene Nachführung der Videokamera mittels der erfindungsgemäßen Kamerasteuereinrichtung bewirkt, daß der Bildfernsprechteilnehmer nicht mehr - wie bis jetzt - gezwungen ist, vor der Videokamera des Teilnehmergeräts in einer vorgegebenen und eingeengten Position zu verharren. Vielmehr ermöglicht es die erfindungsgemäße Kamerasteuereinrichtung dem Teilnehmer, sich im Rahmen der von der Kamerasteuereinrichtung abgedeckten Bewegungsfreiheitsgrade nahezu unbeschränkt zu bewegen: Im einfachsten Fall ermöglicht die Kamerasteuereinrichtung eine eindimensionale Nachführbewegung um eine vorzugsweise vertikale Achse. Die dadurch ermöglichte Schwenkbewegung der Videokamera erlaubt es dann dem Teilnehmer, sich im wesentlichen entlang eines Kreisbogens um die Videokamera zu bewegen, ohne daß diese Bewegung vom anderen Gesprächspartner des Bildfernsprechverkehrs wahrgenommen wird. Eine nur einen einzigen Freiheitsgrad aufweisende Nachführbewegung ist für eine Vielzahl von Anwendungsfällen durchaus ausreichend, so daß durch diese Ausführung der Kamerasteuereinrichtung ein kostengünstiges Bildfernsprech-Teilnehmergerät realisierbar ist.

Eine vorteilhafte Weiterbildung der Erfindung sieht vor, daß die Kamerasteuereinrichtung zwei Freiheitsgrade unterstützt, welche vorzugsweise orthogonal zueinander verlaufen. Durch diese erfindungsgemäßen Maßnahmen wird der Bewegungsspielraum des Teilnehmers in vorteilhafter Art und Weise über eine Kreisbewegung um die Videokamera hinaus erweitert, so daß eine nahezu uneingeschränkte Bewegungsfreiheit des Teilnehmers in zwei Dimensionen vor der Videokamera gewährleistet ist.

Eine weitere vorteilhafte Weiterbildung der Erfindung sieht vor, daß die Videokamera als zoomfähige Kamera ausgebildet ist, und daß die Zoom-Bewegung eines Zoom-Objektivs von der Kamerasteuereinrichtung gesteuert wird. Diese erfindungsgemäße Maßnahme besitzt den Vorteil, daß durch diese erfindungsgemäß vorgesehene laterale Nachführbewegung in besonders einfacher Art und Weise abrupte Änderungen der Kopfgröße des Bildfernsprech-Teilnehmers vermieden werden. Die Wiedergabe des sich vor der Videokamera aufhaltenden Teilnehmers wird verstetigt, da keine störenden Sprünge in der Kopfgröße mehr auftreten.

Eine weitere vorteilhafte Weiterbildung der Erfindung sieht vor, daß die Kamerasteuereinrichtung als weiteren Freiheitsgrad eine Drehbewegung des Videobildes zum Sturzausgleich unterstützt, so daß in besonders vorteilhafter Art und Weise die bei ungünstigen Kamerawinkeln auftretenden stürzenden Linien besonders einfach ausgeglichen werden können.

Eine weitere vorteilhafte Weiterbildung der Erfindung sieht vor, daß die Zoom-Funktion und/oder der Sturzausgleich auf elektronischem Wege erfolgen. Diese Maßnahme besitzt den Vorteil, daß der konstruktiv-mechanische Aufbau der zur Nachführung der Kamera erforderlichen Kamera-Positioniereinheit vereinfacht werden kann. Dadurch ergibt sich eine besonders kostengünstige Realisierung des erfindungsgemäßen Bildfernsprech-Teilnehmergeräts.

Eine weitere vorteilhafte Weiterbildung der Erfindung sieht vor, daß das von der Videokamera aktuell erfaßte Bild auf einem Bildschirm des Bildfernsprech-Teilnehmergeräts durch eine Bild-im-Bild-Technik dargestellt wird. Diese Maßnahme erlaubt es dem Teilnehmer in vorteilhafter Art und Weise, die durch die erfindungsgemäße Kamerasteuereinrichtung durchgeführte Kameranachführung zu kontrollieren und gegebenenfalls - seinen individuellen Wünschen entsprechend - zu verändern.

Weitere vorteilhafte Weiterbildungen der Erfindung ergeben sich aus den Unteransprüchen.

Weitere Einzelheiten der Erfindung sind dem Ausführungsbeispiel zu entnehmen, welches im folgenden anhand der Figuren beschrieben wird. Es zeigen:
- Figur 1: ein Ausführungsbeispiel eines Bildfernsprech-Teilnehmergeräts;
- Figur 2: eine Draufsicht auf das Ausführungsbeispiel;
- Figur 3: ein Blockschaltbild der Kamerasteuereinrichtung.

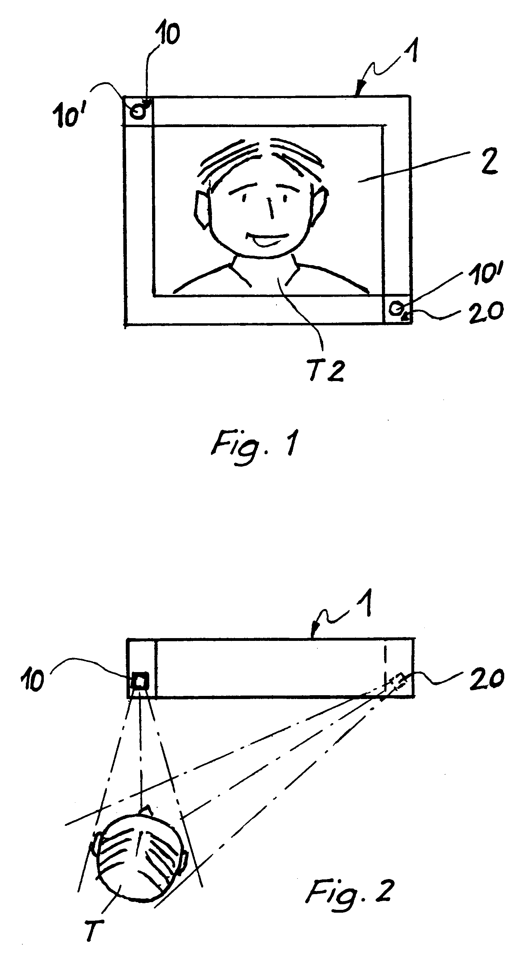

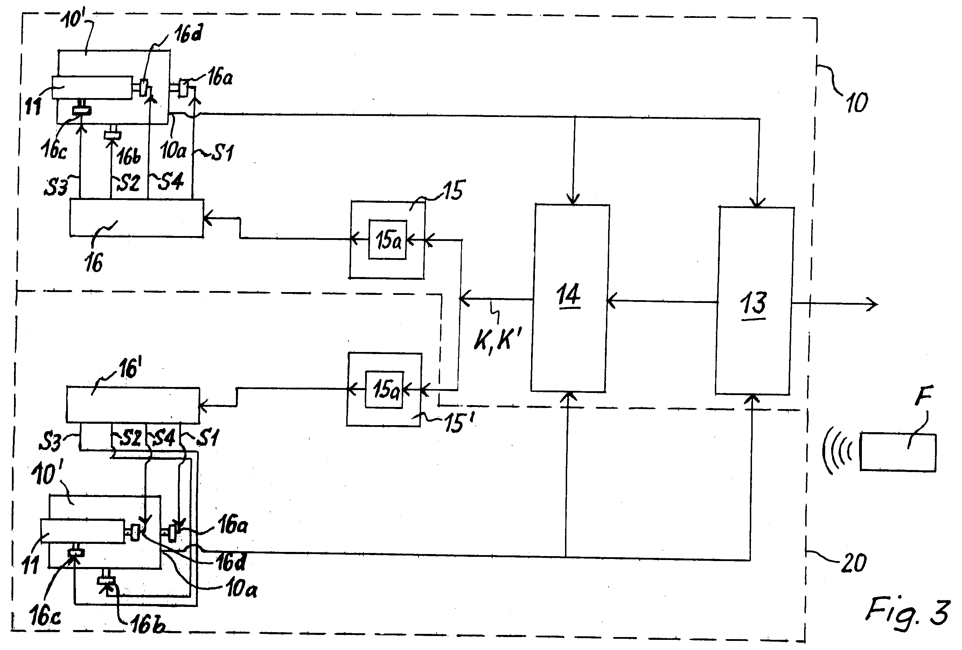

Die Figur 1 zeigt ein Ausführungsbeispiel eines Bildfernsprech-Teilnehmergeräts 1 (im folgenden kurz: Teilnehmergerät 1) aus der Sicht eines davor sitzenden Teilnehmers T (vgl. dazu Figur 2). Das Teilnehmergerät 1 weist einen Bildschirm 2 zur Darstellung eines weiteren Teilnehmers T2 des Bildfernsprechverkehrs sowie zwei Kameramodule 10 und 20 auf. Das erste Kameramodul 10 besteht im wesentlichen - wie aus Figur 3 ersichtlich ist - aus einer mit einem Zoom-Objektiv 11 ausgestatteten Videokamera 10' und einer allgemein mit 12 bezeichneten Kamerasteuereinrichtung. Diese weist einen digitalen Bildspeicher 13 auf, der an einen Videoausgang 10a der Videokamera 10' angeschlossen ist und zum Abspeichern der von der Videokamera 10' gelieferten Videosignale dient. An den Videoausgang 10a der Videokamera 10' ist des weiteren eine digitale Bildvergleichseinheit 14 angeschlossen. Diese dient zum Vergleich des im digitalen Bildspeicher 13 gespeicherten, als Referenzbild fungierenden Videosignals und des von der Videokamera 10' aktuell gelieferten Videosignals. Eine derartige Bildvergleichseinheit 14 ist an sich bekannt - wie z.B. aus Zielverfolgungsgeräten, welche sich z.B. auf eine Kantenabtastung des zu verfolgenden Objekts stützen. Eine weitere Beschreibung des konstruktiven Aufbaus dieser Funktionseinheit und des beim Bildvergleich verwendeten Verfahrens erübrigen sich daher.

Wesentlich ist nur, daß die Bildvergleichseinheit 14 aus dem Vergleich des im digitalen Bildspeicher 13 gespeicherten Referenzbildes und des von der Videokamera 10' gelieferten aktuellen Bildes ein Korrektursignal K ableitet, welches die Unterschiede zwischen den beiden eben genannten Bildern charakterisiert.

Dieses Korrektursignal K wird zu einer Kamerastelleinheit 15 geleitet, die eine digitale Motorsteuerung 15a zur Ansteuerung von vier Schrittmotoren 16a-16d einer Positioniereinheit 16 mit je einem Stellsignal S1-S4 aufweist. Der durch das Stellsignal S1 gesteuerte Schrittmotor 16a dient zur Änderung der Position der Videokamera 10' um einen definierten Horizontalwinkel. In entsprechender Art und Weise bewirkt der durch das zweite Stellsignal S2 gesteuerte zweite Schrittmotor 16b eine Veränderung der Kameraposition um einen definierten Vertikalwinkel. Der dritte Schrittmotor 16c wirkt mit dem Zoom-Objektiv 11 der Videokamera 10' zusammen und erlaubt es zur Realisierung einer lateralen Nachführbewegung, in Abhängigkeit vom dritten Stellsignal S3 die Brennweite des Zoom-Objektivs 11 zu verändern. Der vierte Schrittmotor 16d ermöglicht eine Drehung der Videokamera 10' zum Ausgleich eines bei einer ungünstigen Kameraposition auftretenden Sturzes von vertikalen Linien.

Das zweite Kameramodul 20 weist ebenfalls eine Videokamera 10' auf, welche von einer weiteren Positioniereinheit 16' bewegbar ist, die von einer weiteren Kamerastelleinheit 15' gesteuert ist. Aus Gründen einer kostengünstigeren Herstellung weist das zweite Kameramodul 20 jedoch keinen eigenen digitalen Bildspeicher und keine eigene Bildvergleichseinheit auf. Vielmehr ist vorgesehen, daß das Videosignal der Videokamera 10' des zweiten Kameramoduls 20 dem Bildspeicher 13 und der Bildvergleichseinheit 14 des ersten Kameramoduls 10 zugeführt werden, in der - entsprechend wie beim ersten Kameramodul 10 - die Ableitung eines entsprechenden Korrektursignals K' für die Kamerastelleinheit 15' des zweiten Kameramoduls 20 erfolgt.

Die Funktionsweise der beschriebenen Kamerasteuereinrichtung ist nun wie folgt:
In einem ersten Regeltakt wird das vom Teilnehmer vor Beginn des Bildferngespräches entsprechend justierte Videobild der Videokamera 10' in den Bildspeicher 13 geschrieben. Dieses Videobild wird dann in an sich bekannter Art und Weise über in den Figuren nicht dargestellte Einrichtungen zu dem anderen Teilnehmer des Bildfernsprechverkehrs übertragen.

In einem zweiten Regelungstakt wird das aktuell von der Videokamera 10' gelieferte Bild mit dem im Bildspeicher 13 abgespeicherten, nun als Referenzbild dienenden Videobild verglichen. Die digitale Bildvergleichseinheit 14 leitet aus diesem im ersten Regelungstakt übertragenen Referenzbild und dem in zweiten Regelungstakt aktuell vorliegenden Bild der Videokamera 10' des ersten Kameramoduls ein Korrektursignal K ab, das die zwischen den beiden Vergleichsbildern existierende Abweichung repräsentiert. Dieses Korrektursignal K wird der Kamerastelleinheit 15 zugeleitet. Die digitale Motorsteuereinheit 15a der Kameraeinheit 15 der Kamerasteuereinrichtung berechnet nun in an sich bekannter Art und Weise aus dem Korrektursignal K die Stellsignale S1-S4 für die vier Schrittmotoren 16a-16d der Positioniereinheit 16, welche daraufhin, wie oben beschrieben, eine Nachführung der Videokamera 10' ausführen.

Um zu vermeiden, daß die Bildübertragung durch die Nachführbewegung der Videokamera 10' gestört wird, ist vorgesehen, daß das im ersten Regelungstakt gewonnene und als Referenzbild für den im zweiten Regelungstakt stattfindenden Abgleich dienende Videobild zum anderen Teilnehmer übertragen wird, bis der Nachführvorgang der Videokamera 10' abgeschlossen ist. Erst dann wird das aktuell von der Videokamera 10' gelieferte Bild zur Übertragung verwendet: Während die Videokamera 10' nachgeführt wird, werden also im Bildspeicher 13 keine Übertragungsbilder gespeichert. Andererseits wird während der Speicherung des zu übertragenden Bildes die Videokamera 10' nicht nachgeführt. Dies bewirkt, daß schnelle und große Bewegungen des Teilnehmers vor der Bildaufnahme durch die Videokamera 10' mechanisch unterdrückt werden. Folglich werden nur langsame Bewegungen des Teilnehmers übertragen. Dies bewirkt eine deutliche Verbesserung sowohl des Bildeindrucks wie auch der Bildqualität: Das übertragene Videobild ist frei von abrupten Änderungen des aufzunehmenden Objekts. Aufgrund der vorgesehenen mechanischen Neutralisierung schneller Bewegungen des Bildteilnehmers schon vor der Signalübertragung treten keine Bewegungsunschärfen im Videobild auf.

Im dritten Regelungstakt werden die oben beschriebenen Signalverarbeitungsoperationen mit der Maßgabe wiederholt, daß als Referenzbild das im zweiten Regelungstakt übertragene Bild herangezogen wird.

Dieses Verfahren wird während des Bildfernsprechverkehrs sukzessive fortgesetzt, wobei immer das im vorhergehenden Schritt übertragene Videobild als Referenzbild für den Bildvergleich des aktuellen Regelungstaktes verwendet wird.

Der bis jetzt beschriebene Regelungsvorgang betrifft nur das erste Kameramodul 10. Das zweite Kameramodul 20 des Teilnehmergeräts 1 wird erst dann aktiviert, wenn der vom ersten Kameramodul 10 erfaßte Bereich nur zu einer unbefriedigenden und einen ungünstigen Bildeindruck hervorrufenden Wiedergabe des vor dem Teilnehmergerät 1 befindlichen Teilnehmers T liefert. Diese Konstellation wird anhand der Figur 2 erläutert: In der in dieser Figur dargestellten Position des Teilnehmers T befindet sich dieser nahezu frontal vor der Videokamera 10' des ersten Kameramoduls 10. Diese Videokamera 10' liefert daher ein vom Bildeindruck her günstiges Videobild, welches dem am anderen Ende der Leitung befindlichen Teilnehmer den Eindruck vermittelt, daß er und der erste Teilnehmer T sich von Angesicht zu Angesicht gegenübersitzen und in direktem Blickkontakt stehen. Im Gegensatz hierzu ist es der Videokamera 10' des zweiten Kameramoduls 20 zu diesem Zeitpunkt nur möglich, das Profil des Teilnehmers T zu erfassen, so daß - würde das von der zweiten Kameraeinheit 20 gelieferte Videobild übertragen - beim anderen Gesprächspartner der ungünstige Bildeindruck entstünde, der Teilnehmer T blicke an ihm vorbei.

Bewegt sich der vor dem Teilnehmergerät 1 befindliche Teilnehmer T nun nach rechts, so wird die in Figur 2 dargestellte Situation in ihr Gegenteil verkehrt: Das erste Kameramodul 10 ist dann nurmehr in der Lage, das Profil des Teilnehmers 10 zu erfassen, während das zweite Kameramodul 20 eine Frontansicht des Teilnehmers T liefern würde. In diesem Fall wird dann vom ersten Kameramodul 10 auf das zweite Kameramodul 20 umgeschaltet, so daß die von der Videokamera 10' des zweiten Kameramoduls 20 gelieferten Bilder übertragen werden. Diese Umschaltung zwischen den beiden Kameramodulen 10 und 20 kann entweder individuell vom Teilnehmer selbst (siehe unten) ausgelöst werden. Es ist aber auch möglich, vorzusehen, daß die Umschaltung automatisch erfolgt. Dies kann beispielsweise dann vorgesehen sein, wenn der Auslenkwinkel der betreffenden Videokamera 10' einen bestimmten Wert überschreitet.

Eine alternative Möglichkeit der Funktionsweise des beschriebenen Teilnehmergeräts 1 besteht darin, daß beide Videokameras 10' des ersten und des zweiten Kameramoduls 10 und 20 gleichzeitig arbeiten. Aus den von den beiden Videokameras 10' erzeugten Videosignalen wird dann durch eine entsprechende Signalverarbeitung ein synthetisches Bild durch eine entsprechende Signalverarbeitung generiert, derart, daß stets zumindestens ein virtueller Blickkontakt zwischen den Teilnehmern des Bildfernsprechverkehrs gegeben ist. Durch die gleichzeitige Erfassung des vor dem Teilnehmergerät 1 sitzenden Teilnehmers T mittels zweier Videokameras 10' ist es auch möglich, im Bedarfsteil eine dreidimensionale Darstellung desselben zu erzeugen.

Eine alternative Ausführungsform der oben beschriebenen Kamerasteuerungseinrichtung sieht vor, daß anstelle von mechanischen Zoomen und mechanischer Bilddrehung elektronische Mittel hierfür eingesetzt werden. Das Zoomen kann elektronisch erfolgen, indem als Videokamera 10' eine hochauflösende Videokamera verwendet wird, deren Bild dann so beschnitten und wiedervergrößert wird, daß ein Zoom-Effekt eintritt. In vergleichbarer Weise kann die beim oben beschriebenen Ausführungsbeispiel durch den Motor 16d bewirkte Drehung der Videokamera 10' dadurch substituiert werden, daß die Bilddrehung elektronisch durchgeführt wird, d.h., daß das von der Videokamera 10' erzeugte Videobild durch an sich bekannte elektronische Mittel um eine zur Bildebene des Videobildes orthogonale Achse gedreht wird. Eine derartige mit elektronischen Mitteln arbeitende Kamerasteuerungseinrichtung 12 zeichnet sich dann durch ihre besonders günstigen Herstellungskosten aus.

Außerdem kann vorgesehen sein, daß das von der Videokamera 10' aktuell erfaßte Bild mittels einer Bild-in-Bild-Technik auf dem Bildschirm 2 des Teilnehmergeräts 1 dargestellt wird. Dies ermöglicht es dem Teilnehmer in besonders einfacher Art und Weise, die Kamerasteuerung zu kontrollieren und ggf. - seinen individuellen Wünschen entsprechend - zu korrigieren. Diese Korrektur wird dann vorzugsweise über eine Fernsteuerung F, insbesondere eine Infrarot-Fernsteuerung - oder über eine Maus - an das Teilnehmergerät weitergeleitet.

## Patentansprüche

1. Kamerasteuereinrichtung für ein Bildfernsprech-Teilnehmergerät, das ein Gehäuse aufweist, in dem mindestens eine Videokamera (10') schwenkbar aufgenommen ist, **dadurch gekennzeichnet**, daß die Kamerasteuerungseinrichtung eine Bildvergleichseinheit (14) aufweist, die aus einem Vergleich des aktuell von der Videokamera (10') erfaßten Bildes und eines in einem Bildspeicher (13) abgespeicherten Referenzbildes ein Korrektursignal (K) ableitet, daß das Korrektursignal einer Kamerastelleinheit (15,15') der Kamerasteuereinrichtung zugeführt ist, die aus dem Korrektursignal (K) ein eine Nachführbewegung der Videokamera (10') steuerndes Stellsignal (S1-S4) ableitet, und daß die Kamerasteuereinrichtung eine durch das Stellsignal (S1-S4) gesteuerte Positioniereinrichtung (16,16') aufweist, welche die Nachführbewegung der Videokamera (10') ausführt.

2. Kamerasteuereinrichtung nach Anspruch 1, dadurch gekennzeichnet, daß die Kamerasteuereinrichtung eine in einer horizontalen Ebene verlaufende Nachführbewegung der Videokamera (10') unterstützt.

3. Kamerasteuereinrichtung nach Anspruch 1 oder Anspruch 2, dadurch gekennzeichnet, daß die Kamerasteuereinrichtung eine in einer vertikalen Ebene verlaufende Nachführbewegung der Videokamera (10') unterstützt.

4. Kamerasteuereinrichtung nach einem der Ansprüche 1 bis 3, dadurch gekennzeichnet, daß die Kamerasteuereinrichtung (12) eine laterale Nachführbewegung der Videokamera (10') unterstützt.

5. Kamerasteuereinrichtung nach Anspruch 4, dadurch gekennzeichnet, daß die laterale Nachführbewegung der Videokamera (10') durch ein Zoom-Objektiv (11) der Videokamera (10') durchführbar ist, dessen Brennweite durch die Kamerasteuereinrichtung veränderbar ist.

6. Kamerasteuereinrichtung nach Anspruch 4 oder 5, dadurch gekennzeichnet, daß die laterale Nachführbewegung der Videokamera (10') durch eine elektronische Vergrößerung oder Verkleinerung des von ihr (10') erfaßten Bildausschnitts erfolgt.

7. Kamerasteuereinrichtung nach einem der Ansprüche 1 bis 6, dadurch gekennzeichnet, daß die Kamerasteuereinrichtung eine mechanische Drehung der Videokamera (10') und somit des von ihr (10') erzeugten Videobildes um eine orthogonal zur Bildebene verlaufende Achse unterstützt.

8. Kamerasteuereinrichtung nach einem der Ansprüche 1 bis 6, dadurch gekennzeichnet, daß die Drehung des Videobildes um die zur Bildebene orthogonale Achse durch eine elektronische Bilddrehung erfolgt.

9. Kamerasteuereinrichtung nach einem der Ansprüche 1 bis 7, dadurch gekennzeichnet, daß die Positioniereinheit (16,16') mindestens einen Schrittmotor (16a-16d) aufweist.

10. Kameramodul für ein Teilnehmergerät für den Bildfernsprechverkehr, gekennzeichnet durch eine Kamerasteuereinrichtung nach mindestens einem der Ansprüche 1 bis 9.

11. Teilnehmergerät für den Bildfernsprechverkehr, gekennzeichnet durch eine Kamerasteuereinrichtung nach mindestens einem der Ansprüche 1 bis 9.

12. Teilnehmergerät für den Bildfernsprechverkehr, gekennzeichnet durch mindestens ein Kameramodul (10,20) nach Anspruch 10.

13. Teilnehmergerät für den Bildfernsprechverkehr nach Anspruch 12, dadurch gekennzeichnet, daß zwei Kameramodule (10,20) vorgesehen sind, und daß wahlweise das von der Videokamera (10') des ersten Kameramoduls (10) oder das von der Videokamera (10') des zweiten Kameramoduls (20) erzeugte Videobild übertragbar ist.

14. Teilnehmergerät für den Bildfernsprechverkehr nach Anspruch 13, dadurch gekennzeichnet, daß die Umschaltung zwischen dem ersten (10) und dem zweiten Kameramodul (20) automatisch oder manuell durchführbar ist.

15. Teilnehmergerät für den Bildfernsprechverkehr nach Anspruch 12, dadurch gekennzeichnet, daß zwei Kameramodule (10,20) vorgesehen sind, und daß aus dem von der Videokamera (10') des ersten Kameramoduls (10) und dem von der Videokamera (10') des zweiten Kameramoduls (20) jeweils erzeugten Videobild durch eine entsprechende Signalverarbeitung ein synthetisches Videobild gebildet und übertragen wird, wobei das synthetische Videobild derart erzeugt wird, daß es zumindest einen virtuellen Blickkontakt zwischen den beiden Teilnehmern des Bildfernsprechverkehrs sicherstellt und/oder eine Generierung von dreidimensionalen Videobildern ermöglicht.

16. Teilnehmergerät für den Bildfernsprechverkehr nach einem der Ansprüche 12 bis 15, dadurch gekennzeichnet, daß das Teilnehmergerät (1) eine mit der Kamerasteuereinrichtung zusammenwirkende Fernbedienung (F) aufweist.

17. Teilnehmergerät nach einem der Ansprüche 11 bis 16, dadurch gekennzeichnet, daß das von der Videokamera (10') eines der Kameramodule (10,20) erzeugte Videobild auf einem Bildschirm (2) des Teilnehmergeräts (1) darstellbar ist.

18. Teilnehmergerät nach Anspruch 17, dadurch gekennzeichnet, daß die Darstellung des von der Videokamera (10') erzeugten Videobildes auf dem Bildschirm (2) des Teilnehmergerätes (1) durch eine Bild-im-Bild-Technik erfolgt.
